# EUROPEAN PATENT SPECIFICATION

(11) **EP 3 513 461 B1**
(45) Date of publication and mention of the grant of the patent: **02.10.2024**
(21) Application number: 16914442.5
(22) Date of filing: 29.08.2016
(51) Int. Cl.: H02G 15/06, H01R 43/18, H01R 13/53, B29C 45/16, B29C 45/14

(54) **CABLE ACCESSORY AND PROCESS FOR PREPARING THE SAME**
KABELZUBEHÖR UND VERFAHREN ZUR HERSTELLUNG DAVON
ACCESSOIRE DE CÂBLE ET SON PROCÉDÉ DE PRÉPARATION

(43) Date of publication of application: 24.07.2019
(73) Proprietor: Hitachi Energy Ltd, 8050 Zürich (CH)
(72) Inventor: QIAO, Bo, Beijing 100029 (CN); WU, Fumei, Beijing 100029 (CN); CHEN, Jiansheng, Beijing 100024 (CN); ROCKS, Jens, 8807 Freienbach (CH); HE, Jian, Beijing 100015 (CN); MENG, Delun, Beijing 100018 (CN); WANG, Lin, 441 36 Alingsås (SE); LI, Tong, Beijing 100025 (CN); TAO, Zhiqiang, Beijing 100085 (CN)
(74) Representative: Michalski Hüttermann & Partner Patentanwälte mbB
(86) International application number: PCT/CN2016/097174
(87) International publication number: WO 2018/039872

(56) References cited:
- WO-A1-03/098749
- CN-A- 1 458 711
- CN-A- 102 702 456
- CN-A- 104 327 266
- FI-B- 126 132
- JP-A- 2003 217 361
- US-A- 5 049 603
- US-A1- 2005 050 691
- US-A1- 2006 279 084

## Description

### Field of the invention

The present invention relates to a cable accessory made of a thermoplastic elastomer material. The present invention also relates to the use of a thermoplastic elastomer material in preparing a cable accessory. The present invention further relates to a process for preparing a cable accessory made of a thermoplastic elastomer material.

### Background of the invention

Cable accessories are widely used along with electrical power cables to assist with, for example, cable connections, cable terminations, splice rejacketing, cable jacket sealing, grounding and cable preparation, and so on.

Current cable accessories, including one, two, or three layers, are generally made by ethylene-propylene-diene monomer (EPDM) rubber or silicon rubber materials. Rubber materials need curing, so during the production of cable accessories, the hot press processing is needed. A typical three-layer cable accessory is usually manufactured by molding an inner semiconductive layer and an outer semiconductive jacket separately, and placing these two components in a final insulation press and then injecting or inserting an insulation layer between these two semiconductive layers. Accordingly, the manufacturing process is time-consuming since it generally takes for example 10 to 20 minutes for each layer to be cured, which makes the production efficiency very low. Furthermore, EPDM rubbers cannot be recycled for second manufacture, and mixed EPDM rubbers have to be stored below 20°C with a short storage life, typically less than half a year.

Under such circumstances, Chinese Patent No. 1,234,192 to Fuzhou Zhongneng Power Equipment Co. Ltd provides a cable connector with an intermediate layer made from thermoplastic elastomer (TPE) materials. CN1,234,192 mentions that the use of TPE materials for preparing the intermediate layer of the cable connector improves the production efficiency. However, CN1,234,192 merely mentions the TPE materials in general, without specifying the type of the TPE materials. According to CN1,234,192, the inner layer and the outer layer seem to be still made by conventional methods, and an adhesive layer is needed to mold the intermediate layer into the cable connector.

Further,CN1,234,192 does not disclose how to select the TPE materials so as to enable the cable connectors made from the TPE materials to meet the harsh application requirements, especially in terms of mechanical properties and electrical properties.

US Patent No. 6,905,356 to Roy, et al. discloses an electrical connector comprising three TPE material layers which may be overmolded to increase production speed and efficiency thereby lowering production costs. US6,905,356 mentions that, by using relatively new electrical grade TPE materials, molding can use new layer technology. This technology may include molding the first or inner semiconductive layer first, then overmolding the second or insulation layer, and then overmolding the third or outer semiconductive shield layer over the insulation layer. However, similar to CN1,234,192, US6,905,356 merely mentions the TPE materials in general, without specifying how to select suitable TPE materials from the bunch of known TPE materials. US6,905,356 focuses on the manufacturing process of the three layers, without mentioning the performance of the electrical connector made therefrom, especially in terms of mechanical properties and electrical properties which are required to meet the harsh application requirements.

In fact, no cable connectors made from TPE materials are found to be available on the current electrical market. The present inventors have also used several common TPE materials to make the electrical connectors according to the disclosure of US6,905,356, but found that they exhibited too poor mechanical properties and/or electrical properties to be suitable for replacing the current EPDM connectors.

WO 2003/098749 A1 describes an electrical connector including thermoplastic elastomer material and associated methods. The electrical connector may include a connector body having a passageway therethrough. The connector body may include a first layer adjacent the passageway, a second layer surrounding the first layer and comprising an insulative thermoplastic elastomer (TPE) material, and a third layer surrounding the second layer. The third layer preferably has a relatively low resistivity, and may also include a semiconductive TPE material. In some embodiments, the first layer may also include a semiconductive TPE material. The TPE material layers may be overmolded to thereby increase production speed and efficiency thereby lowering production costs. The TPE material may also provide excellent electrical performance and otheradvantages.

Therefore, there is a need to develop a cable accessory which can be manufactured in an efficient way and meanwhile exhibits competent performance comparable to the on-market cable accessories made from EPDM. Specifically, there is a need to develop a cable accessory which is made of TPE materials and is ready for commercialization.

### Summary of the invention

The invention is defined by the features of the independent claims.

In a first aspect, the present invention relates to a cable accessory according to claim 1.

In a second aspect, the present invention relates to a cable connector according to claim 2.

In a third aspect, the present invention relates to the use of thermoplastic elastomer materials according to claim 12.

In a forth aspect, the present invention relates to a process for preparing a cable accessory or a cable connector according to claim 14.

By using the thermoplastic elastomer (TPE) material comprising hard segments and soft segments in a weight ratio of 10:90 to 50:50 to prepare a cable accessory, at least one or more of the following advantages can be achieved:
a) the manufacturing time can be significantly shortened since the TPE materials can be easily and quickly processed as thermoplastics by injection molding process without the need of time-consuming hot pressing process;
b) the cable accessory of the present invention exhibits competent performance comparable to the current cable accessories made from EPDM, which is of commercial significance;
c) the cable accessory of the present invention is environmentally friendly since the TPE materials are recyclable for second manufacture;
d) the cable accessory of the present invention is economical and/or cost-effective since the cost of the TPE materials is generally lower than EPDM rubbers and silicon rubbers and the manufacturing time is very short;
e) the consistency in both raw materials and the fabricated cable accessories is improved since the TPE materials can be stored at room temperature for a long time and require little or no compounding and therefore show little or no batch-to-batch variations; and
f) the present invention makes it possible to commercialize the cable accessory made from TPE materials.

### Brief Description of the Drawings

Figure 1 shows a schematic profile of a cable accessory according to an embodiment of the present invention.
Figure 2 shows the schematic cross section of a cable accessory according to an embodiment of the present invention during the sequential formation of a first layer, a second layer and a third layer.
Figure 3 shows a picture of the cross section of a cable accessory produced according to the present invention.

### Detailed Description of the Invention

Although the present invention will be described with respect to particular embodiments, this description is not to be construed in a limiting sense.

As used in this specification and in the appended claims, the singular forms of "a" and "an" also include the respective plurals unless the context clearly dictates otherwise.

In the context of the present invention, the terms "about" and "approximately" denote an interval of accuracy that a person skilled in the art will understand to still ensure the technical effect of the feature in question. The term typically indicates a deviation from the indicated numerical value of ±20 %, preferably ±15 %, more preferably ±10 %, and even more preferably ±5 % or even ±1 %.

It is to be understood that the term "comprising" is not limiting. For the purposes of the present invention the term "consisting of" is considered to be a preferred embodiment of the term "comprising". If hereinafter a group is defined to comprise at least a certain number of embodiments, this is meant to also encompass a group which preferably consists of these embodiments only.

Furthermore, the terms "first", "second", "third" or "a)", "b)", "c)", "d)" etc. and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In case the terms "first", "second", "third" or "a)", "b)", "c)", "d)" etc. relate to steps of a method or use, there is no time or time interval coherence between the steps, i.e. the steps may be carried out simultaneously or there may be time intervals of seconds, minutes, hours, days, weeks, months or even years between such steps, unless otherwise indicated in the application as set forth herein above or below.

It is an object of the present invention to provide a novel and improved cable accessory according to claim 1.

As used herein, the term "cable accessory" refers to any subordinate or supplementary item of a cable, especially an electrical power cable. Electrical power cables are widely used for distributing power across vast power grids or networks, moving electricity from power generation plants to the consumers of electric power. Power cables may be constructed to carry high voltages (HV, greater than about 72.5KV according to IEC standards such as IEC38, IEC298 and IEC439), medium voltages (MV, greater than about 1.0KV and below about 72.5KV according to IEC standards such as IEC38, IEC298 and IEC439), or low voltages (LV, less than or equal to about 1.0KV according to IEC standards such as IEC38, IEC298 and IEC439), which may pose different requirements to the cable accessories. In an embodiment of the present invention, the cable accessory is a HV cable accessory. In another embodiment of the present invention, the cable accessory is a MV cable accessory. In a further embodiment of the present invention, the cable accessory is a LV cable accessory.

As used herein, the terms "thermoplastic elastomer (TPE)" or "thermoplastic elastomer (TPE) material" are exchangeable with each other and refer to a class of copolymers or a physical mix of polymers (usually a plastic and a rubber) which consist of materials with both thermoplastic and elastomeric properties. While most elastomers are thermosets, thermoplastics are in contrast relatively easy to use in manufacturing, for example, by injection molding. Thermoplastic elastomers show advantages typical of both rubbery materials and plastic materials. The principal difference between thermoset elastomers and thermoplastic elastomers is the type of cross-linking bond in their structures. All TPEs are composed of hard segments and soft segments. The hard segments may be crystalline domains of a copolymer or crystalline polymers of a physical polymer mix. The soft segments may be amorphous domains of a copolymer or amorphous polymers of a physical polymer mix. It is the hard segments that act as the cross-linking bond and give TPEs their thermoplastic character and it is the soft segments that give TPEs their elastomeric character.

Without being bound to any theory, it is believed that the weight ratio of the hard segments and the soft segments would affect the usability of the TPE material in the cable accessories. According to the present invention, the thermoplastic elastomer material used for making the cable accessory comprises hard segments and soft segments in a weight ratio of 10:90 to 50:50. In specific embodiments, the weight ratio of the hard segments and the soft segments is preferably no lower than 15:85, or no lower than 20:80, or no lower than 25:75, and may also be no lower than 30:70. On the other hand, the weight ratio of the hard segments and the soft segments is preferably no higher than 45:55, or no higher than 40:60, or no higher than 35:65, and may also be no higher than 30:70. These ranges would provide a good balance of the processability or melt-formability, the mechanical property and the insulation performance of the TPE materials for use in the cable accessories.

### Thermoplastic elastomer

The TPE material useful in the present invention may be at least one selected from a styrenic block copolymer elastomer (TPE-s), an olefin-based thermoplastic elastomer (TPE-o), a thermoplastic vulcanizate elastomer (TPE-v or TPV), a polyamide-based thermoplastic elastomer, a polyester-based thermoplastic elastomer, a polyurethane-based thermoplastic elastomer, and any combinations thereof.

Specifically, as useful herein, the hard segments of the TPE material may be derived from at least one selected from the group consisting of polyolefins, polyesters, polyamides, polyurethanes and any combinations thereof. In a specific embodiment of the present invention, the hard segments of the TPE material may be derived from at least one selected from the group consisting of polyethylene, polypropylene, polybutylene, polystyrene, polyethylene terephthalate, polybutylene terephthalate and any combinations thereof. The number average molecular weight of the polymer forming the hard segment may be from 5000 to 120000, or from 7000 to 110000, or from 8000 to 100000, or from 10000 to 80000, from a viewpoint of melt-formability.

As useful herein, the soft segments of the TPE material may be derived from at least one selected from the group consisting of diolefin polymers, hydrogenated diolefin polymers, polyethers, polyesters, and any combinations thereof. In a specific embodiment of the present invention, the soft segments of the TPE material may be derived from at least one selected from the group consisting of polybutadiene, hydrogenated polybutadiene, polyisoprene, hydrogenated polyisoprene, polyethyleneglycol, polypropyleneglycol, polybutyleneglycol, ethylene-propylene-diene monomer (EPDM) rubber and any combinations thereof. The number average molecular weight of the polymer forming the soft segment is preferably from 30000 to 220000, or from 35000 to 198000, or from 40000 to 150000, or from 50000 to 120000 from the viewpoints of toughness and flexibility.

The thermoplastic elastomer can be prepared by copolymerizing or mixing the polymer for forming the hard segment and the polymer for forming the soft segment by a known method in the art.

In a preferred embodiment of the present invention, the thermoplastic elastomer material is selected from a styrenic block copolymer elastomer, a thermoplastic vulcanizate elastomer, and any combinations thereof.

Examples of the styrenic block copolymer include a material, in which at least polystyrene forms a hard segment, and another polymer (for example, polybutadiene, polyisoprene, polyethylene, hydrogenate polybutadiene, hydrogenate polyisoprene, or any combination thereof) forms an amorphous soft segment with a low glass transition temperature. The polystyrene may be prepared from a radical polymerization method, an ionic polymerization method, or any other method which is known in the art. The polymer forming the soft segment is preferably polybutadiene, polyisoprene, poly(2,3-dimethylbutadiene), or any combination thereof.

Specific examples of the styrenic block copolymer are derived from the combinations of the respective hard segment and the respective soft segment described above. Particularly, a combination of polystyrene and polybutadiene, and a combination of polystyrene and polyisoprene are preferable. Further, the soft segment is preferably hydrogenated, so as to suppress unintended crosslinking of a thermoplastic elastomer.

More specifically, the styrenic block copolymer may be selected from a styrene/butadiene-based copolymer [such as, SBS (polystyrene-poly(butylene) block-polystyrene), SEBS (polystyrene-poly(ethylene/butylene) block-polystyrene)], a styrene-isoprene copolymer (such as polystyrene-polyisoprene block-polystyrene), a styrene/propylene-based copolymer [such as, SEP (polystyrene-(ethylene/propylene) block), SEPS (such as, polystyrene-poly(ethylene/propylene) block-polystyrene), SEEPS (such as, polystyrene-poly(ethylene-ethylene/propylene) block-polystyrene), and SEB (such as, polystyrene (ethylene /butylene) block)]. In a preferred embodiment of the present invention, the styrenic block copolymer is SEBS.

As used herein, the term "thermoplastic vulcanizate" refers to an alloy made from a thermoplastic phase and a crosslinkable rubber phase by dynamical vulcanization. In addition to the thermoplastic phase and the rubber phase, the thermoplastic vulcanizate can further comprise various amounts of curatives, plasticizers, fillers, and other additives as necessary. The thermoplastic phase may be derived from a polyolefin, a polyester, a polystyrene or any combination thereof. Specifically, the thermoplastic phase may be derived from a polyolefin, such as polyethylene, polypropylene, isotactic polypropylene, polybutene or any copolymer and/or mixture thereof. The rubber can be any hydrocarbon rubber such as butyl rubbers, halobutyl rubbers, halogenated (e.g. brominated) copolymers of paramethyl styrene and isobutylene, EPDM rubber, nitrile-butadiene rubber (NBR), natural rubber or diene-based homo or copolymer rubber. A preferable combination of the thermoplastic phase and the rubber phase is a combination of polypropylene phase and EPDM rubber phase, which may be unmodified or modified by, for example, other polyolefins and/or rubbers. The EPDM rubber is also known as an ethylene-propylene-diene-polymethylene rubber, which has sufficient incorporation of both ethylene and propylene in the polymer chain such that these materials are rubbery at room temperature rather than solid.

In an embodiment of the present invention, the thermoplastic elastomer material is selected from SEBS (TPE-s), a dynamically cured EPDM/PP (TPE-v), and any combinations thereof.

The present invention also relates to the use of a thermoplastic elastomer material comprising hard segments and soft segments in a weight ratio of 10:90 to 50:50 as discussed hereinabove for preparing a cable accessory according to claim 1.

### Cable accessory

The cable accessory of the present invention comprises a first layer defining a passageway and a second layer surrounding the first layer.

The passageway may have first and second ends and a medial portion extending therebetween. The first layer may be positioned along the medial portion of the passageway and spaced inwardly from respective ends of the passageway.

In an embodiment of the present invention, the cable accessory is an I-shaped cable connector, L-shaped cable connector or a T-shaped cable connector. In this case, the medial portion of the passageway may have a bend therein. The first end of the passageway may also have an enlarged diameter to receive an electrical bushing insert for some embodiments.

In a specific embodiment of the present invention, the passageway may be of a tubular shape. The passageway may have a uniform diameter along the medial portion from the first end to the second end. In some embodiments, the passageway may have an enlarged diameter adjacent at least one of the first and second ends. In some other embodiments, the passageway may have a progressively increasing or decreasing diameter in an area adjacent at least one of the first and second ends.

The passageway may be extended by the second layer. In other words, the second layer may cover the first layer and meanwhile define an extended passageway.

The first layer may have at least one predetermined property to reduce the electrical stress or uniformize the electrical field. The first layer is semi-conductive. The volume resistivity of the first layer is below 100 Ω·cm. In an embodiment of the present invention, the volume resistivity of the first layer is below 90 Ω·cm, or below 80 Ω·cm, or even below 70 Ω·cm.

The first layer may have desired mechanical properties depending on the specific application. In an embodiment of the present invention, the first layer has a hardness (shore A) in the range of 50-100, or 60-90, or 65-85, or 70-80. In an embodiment of the present invention, the first layer has a tensile strength in the range of 3-25MPa, or 5-20MPa, or 10-15MPa. In an embodiment of the present invention, the first layer has an elongation at break in the range of 100-700%, or 150-650%, or 200-600%, or 250-550%. In an embodiment of the present invention, the first layer has a tear strength in the range of above 30N/mm, or 32-100N/mm, or 38-90N/mm, or 45-80N/mm.

The second layer may act as an insulation layer to insulate the cable which goes through the passageway. In an embodiment of the present invention, the volume resistivity of the second layer is above 10⁹ Ω·cm, or above 10¹¹ Ω·cm, or above 10¹¹ Ω·cm, or above 10¹⁵ Ω·cm, or even above 10¹⁶ Ω·cm. In an embodiment of the present invention, the second layer has a dielectric strength (23°C, 1mm) in the range of above 10 kV/mm, or 20-100kV/mm, or 25-80kV/mm, or 30-60kV/mm.

The second layer may have desired mechanical properties depending on the specific application. In an embodiment of the present invention, the second layer has a hardness (shore A) in the range of 30-90, or 35-85, or 40-80, or 50-75. In an embodiment of the present invention, the second layer has a tensile strength in the range of 8-35MPa, or 10-30MPa, or 12-20MPa. In an embodiment of the present invention, the second layer has an elongation at break in the range of 300-1000%, or 400-950%, or 500-850%, or 600-900%. In an embodiment of the present invention, the second layer has a tear strength in the range of above 20N/mm, or 30-100N/mm, or 35-90N/mm, or 40-80N/mm.

Therefore, in an embodiment of the present invention, the cable accessory comprises a first layer defining a passage way and a second layer surrounding the first layer, in which the first layer is made of a first thermoplastic elastomer material which is semi-conductive and comprises hard segments and soft segments in a weight ratio of 20:80 to 50:50, or 25:75 to 45:55, or 30:70 to 40:60, and the second layer is made of a second thermoplastic elastomer material which is insulative and comprises hard segments and soft segments in a weight ratio of 15:85 to 45:55, or 20:80 to 40:60, or 25:75 to 35:65, or even 30:70 to 33:67.

In addition to the first layer and the second layer, the cable accessory may further comprise a third layer surrounding the second layer. Therefore, in a further embodiment of the present invention, the cable accessory further comprises a third layer surrounding the second layer, in which the third layer is made of a third thermoplastic elastomer material which is semi-conductive and comprises hard segments and soft segments in a weight ratio of 10:90 to 40:60, or 15:85 to 35:65, or 20:80 to 30:70.

The third layer may have a length same as or different from that of the second layer. Preferably, the passageway may be further extended by the third layer. In other words, the third layer may cover the second layer and meanwhile define a further extended passageway.

The third layer may define an outermost layer of the cable accessory and function to eliminate static electricity. In this case, the third layer may be semi-conductive. In an embodiment of the present invention, the volume resistivity of the third layer is below 1000 Ω•cm, or below 900 Ω•cm, or below 800 Ω•cm, or even below 700 Ω•cm.

The third layer may have desired mechanical properties depending on the specific application. In an embodiment of the present invention, the third layer has a hardness (shore A) in the range of 20-90, or 30-85, or 40-80, or 50-70. In an embodiment of the present invention, the third layer has a tensile strength in the range of 6-25MPa, or 10-20MPa, or 12-18MPa. In an embodiment of the present invention, the third layer has an elongation at break in the range of 300-1200%, or 400-1100%, or 500-1000%, or 600-800%. In an embodiment of the present invention, the third layer has a tear strength in the range of above 15N/mm, or 30-100N/mm, or 35-90N/mm, or 40-80N/mm.

The first thermoplastic elastomer, the second thermoplastic elastomer material and the third thermoplastic elastomer material may independently be selected from the thermoplastic elastomers as discussed hereinbefore.

In an embodiment of the present invention, the first thermoplastic elastomer material and the third thermoplastic elastomer material each independently comprise a conductive filler. Any conductive filler that will render the thermoplastic elastomer material semi-conductive without significantly impairing other properties of the thermoplastic elastomer material is applicable to the present invention. In a specific embodiment, the conductive filler is selected from the group consisting of conductive carbon black, conductive graphite, metal particles, metal fibers, and any combinations thereof.

The amount of the conductive filler in not specifically limited, only if it can provide the thermoplastic elastomer with desired semi-conductivity and meanwhile does not significantly impair other properties of the thermoplastic elastomer material. In an embodiment of the present invention, the conductive filler may be present in an amount of 5-40 wt%, or 10-30wt%, or 15-25wt%, based on the total weight of the first or third thermoplastic elastomer material.

Therefore, the present invention further relates to the use of a thermoplastic elastomer material comprising hard segments and soft segments in a weight ratio of 10:90 to 50:50 as discussed hereinabove for preparing a cable accessory, wherein the thermoplastic elastomer material further comprises a conductive filler selected from the group consisting of conductive carbon black, conductive graphite, metal particles, metal fibers, and any combinations thereof.

It should be noted that the TPE materials used in the above two or three layers may be same or different in a cable accessory. In other words, those skilled in the art could readily and independently select a suitable TPE material for each layer as discussed above to meet the property requirement of each layer.

It should also be noted that the cable accessory can have various compositions and structures depending on its specific application. In other words, those skilled in the art could readily modify or change the composition or the structure as discussed above so as to adapt it to the applications other than the I-shaped, L-shaped and T-shaped cable connectors. For examples, the cable accessory may have more than three layers, or some other functional additives which are not discussed in the present disclosure may be added to the composition of a certain layer so as to provide additional advantages. Furthermore, the compositions or the structures as discussed above may be different to some extent for LV, MV and HV applications, respectively.

### Method for preparing a cable accessory

According to the present invention, a process for preparing a cable accessory according to claim 14 is provided.

TPE materials have the potential to be recyclable since they can be molded, extruded and reused like thermoplastics. TPE materials also require little or no compounding, with no need to add reinforcing agents, stabilizers or cure systems. Hence, batch-to-batch variations in weighting and metering components are absent, leading to improved consistency in both raw materials and fabricated articles.

The manufacturing methods with TPEs can be extrusion, injection molding, compression molding, and/or any other molding method applicable to the thermoplastics. Fabrication via injection molding is extremely rapid and highly economical. Both the equipment and methods normally used for the extrusion or injection molding of a conventional thermoplastic are generally suitable for TPEs. TPEs can also be processed by blow molding, thermoforming, and heat welding.

In an embodiment of the present invention, the process for preparing a cable accessory comprises a step of injection molding a thermoplastic elastomer material into a cable accessory, wherein the thermoplastic elastomer material comprises hard segments and soft segments in a weight ratio of 10:90 to 50:50 as discussed hereinabove.

In a further embodiment of the present invention, the process for preparing a cable accessory comprises the steps of injection molding a first thermoplastic elastomer material into a first layer defining a passage way and injection molding a second thermoplastic elastomer material into a second layer surrounding the first layer, wherein the first thermoplastic elastomer material is semi-conductive and comprises hard segments and soft segments in a weight ratio of 20:80 to 50:50, and the second thermoplastic elastomer material is insulative and comprises hard segments and soft segments in a weight ratio of 15:85 to 45:55.

In an even further embodiment of the present invention, the process for preparing a cable accessory further comprises a step of injection molding a third thermoplastic elastomer material into a third layer surrounding the second layer, in which the third thermoplastic elastomer material is semi-conductive and comprises hard segments and soft segments in a weight ratio of 10:90 to 40:60.

Therefore, the cable accessory of the present invention can be manufactured by continuous whole injection process from the first layer to the second layer and, if desired, to the third layer due to the use of thermoplastic elastomers as discussed above. This imparts the process with low energy consumption and high efficiency.

In an embodiment of the present invention, the method for preparing a cable accessory is conducted on a standard injection molding machine for thermoplastics, such as those incorporating 3 screw zones. The screw could have a compression ratio of at least 2:1 and an LID ratio of at least 20:1.

The processing temperature is highly dependent on the specific compound to be processed, especially on the melting point of the specific compound to be processed. As a general rule, the barrel temperature should be above the melting point of the specific compound being processed, and increases progressively by 10 to 20°C per heating zone from the feed hopper. The nozzle temperature could be equal to or 10°C below the temperature of the last heating zone. In a specific embodiment of the present invention, the nozzle temperature of an injection molding machine for processing the TPE materials according to the present invention is 150 to 300°C, or 180 to 250°C, or 200 to 230°C.

The temperature of the injection mold could be high enough to allow the melt fill the mold and meanwhile be low enough to set the melt into a certain shape. In a specific embodiment of the present invention, the temperature of the injection mold is 35-80°C, or 40-75°C or 45-70°C, or 50-65°C.

The injection pressure and injection rate could be selected in accordance with the melt viscosity and shear sensitivity of the material being processed and therefore may vary for different TPE materials. In a specific embodiment of the present invention, the injection pressure is 10 to 150bar, or 10-130bar, or 20 to 110bar, or 50-100bar, or 60-90bar.

Once the processing conditions are set, the time for preparing the cable accessory is generally very short. It generally takes, for example, 0.5-5 minutes, or 1-4 minutes, or 2-3 minutes to get each layer molded. This makes the process highly effective.

### Examples

The present invention will be further clarified by the following examples, which are intended to be purely exemplary of the invention. Other embodiments of the invention will be apparent to those skilled in the art from a consideration of this specification or practice of the invention as disclosed herein.

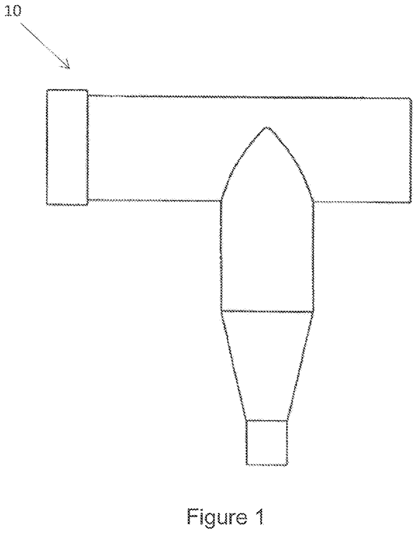

Figure 1 shows a schematic profile of an exemplary cable accessory according to an embodiment of the present invention. The cable accessory 10 as shown in Figure 1 is a T-shaped cable connector useful in connecting multilead cables. Those skilled in the art would understand that the cable connector can also be I-shaped or L-shaped.

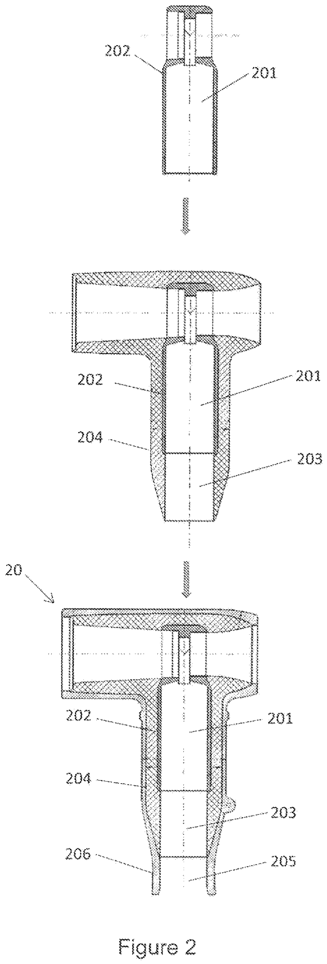

Figure 2 shows the schematic cross section of a cable accessory according to an embodiment of the present invention during the sequential formation of a first layer, a second layer and a third layer. The cable accessory 20 includes the first layer 202 defining a passageway 201, the second layer 204 surrounding the first layer 202 and defining an extended passageway 203, and the third layer 206 surrounding the second layer 204 and defining a further extended passageway 205.

An exemplary process for preparing the three-layer cable accessory of the present invention comprises the following steps:
- set up an injection molding machine;
- feed a first TPE material to the feed hopper of the injection molding machine;
- install a first-layer mold in the injection molding machine;
- Injection molding the first TPE material into the first-layer mold;
- keep pressure and open the mold to get out the first layer;
- feed a second TPE material to the feed hopper of the injection molding machine;
- install a second-layer mold in the injection molding machine and insert the first layer;
- Injection mold the second TPE material into the second-layer mold;
- keep pressure and open the mold to get out the second layer which is attached to the first layer and surrounds the first layer;
- feed a third TPE material to the feed hopper of the injection molding machine;
- install a third-layer mold in the injection molding machine and insert the second layer attached to the first layer;
- Injection mold the third TPE material into the third-layer mold;
- keep pressure and open the mold to get out the three-layer cable accessory product, wherein the third layer is attached to the second layer and surrounds the second layer.

In the following examples and comparative examples, cable accessories with the inner structures as shown in Figure 2 were prepared.

### Materials

The materials used herein to prepare the three-layer cable accessories are shown in Table 1 below.

**Table 1**

| Material Code | Model | Specification | Supplier |
|---|---|---|---|
| EPDM-1 | K4869 | Mooney viscosity 48; ENB (i.e., 5-ethylidene-2-norbornene) 8.7%, Ethylene 64% | Lanxess |
| EPDM-2 | K5469 | Mooney viscosity 52; ENB 4.5%, Ethylene 63% | Lanxess |
| EPDM-3 | K6471 | Mooney viscosity 65: ENB 4.7%, Ethylene 67% | Lanxess |
| SEBS-1 | 655 | H/S weight ratio*: 40:60 | Taiwan Yingquan chemical |
| SEBS-2 | 1651 | H/S weight ratio: 33:67 | Kraton |
| SEBS-3 | 2315 | H/S weight ratio: 29:71 | Italy Enichem |
| SEBS-4 | 1657 | H/S weight ratio: 5:95 | Kraton |
| TPV-1 | Milastomer S-702B | HIS weight ratio: 30:70 | Mitsui chemicals America, Inc |
| TPV-2 | Santoprene 103-50 | H/S weight ratio: 40:60 | Exxonmobile chemical |
| TPV-3 | Santoprene 8221-60 | H/S weight ratio: 20:80 | Exxonmobile chemical |
| TPV-4 | Santoprene 251-92W232 | H/S weight ratio: 60:40 | Exxonmobile chemical |
| CB-1 | Super conductive carbon black | Conductive carbon black | Lihuajin Tianjing |
| CB-2 | Super conductive carbon black | Conductive carbon black | Beijing carbon black factory |
| GR-1 | ADTKP801 | Conductive graphite | Shijiazhuang ADT carbon material factory |

| | | | |
|---|---|---|---|
| *: "HIS weight ratio" means the weight ratio of hard segments to soft segments | | | |

### Example 1

- set up an injection molding machine (Potenza PT250, Lijing Machinery CO.LTD), with a nozzle temperature of 200-230°C, a mold temperature of around 65°C, and an injection pressure of 20-110bar;
- feed a mixture of 10kg SEBS-1 and 4kg CB-1 to the feed hopper of the injection molding machine;
- install a first-layer mold in the injection molding machine;
- Injection mold the mixture of SEBS-1 and CB-1 into the first-layer mold;
- keep pressure for 15s and open the mold to get out the first layer;
- feed 10 kg SEBS-2 to the feed hopper of the injection molding machine;
- install a second-layer mold in the injection molding machine and insert the first layer;
- Injection mold the SEBS-2 into the second-layer mold;
- keep pressure for 30s and open the mold to get out the second layer which is attached to the first layer and surrounds the first layer;
- feed a mixture of 10kg SEBS-3 and 3kg CB-2 to the feed hopper of the injection molding machine;
- install a third-layer mold in the injection molding machine and insert the second layer attached to the first layer;
- Injection mold the mixture of SEBS-3 and CB-2 into the third-layer mold;
- keep pressure for 50s and open the mold to get out the three-layer cable accessory product (referred to as "Product 1"), wherein the third layer is attached to the second layer and surrounds the second layer.

### Example 2

- set up the same injection molding machine as used in Example 1;
- feed a mixture of 10kg TPV-1 and 1kg GR-1 to the feed hopper of the injection molding machine;
- install the first-layer mold in the injection molding machine;
- Injection mold the mixture of TPV-1 and GR-1 into the first-layer mold;
- keep pressure for 15s and open the mold to get out the first layer;
- feed 10 kg TPV-2 to the feed hopper of the injection molding machine;
- install the second-layer mold in the injection molding machine and insert the first layer;
- Injection mold the TPV-2 into the second-layer mold;
- keep pressure for 30s and open the mold to get out the second layer which is attached to the first layer and surrounds the first layer;
- feed a mixture of 10kg TPV-3 and 2kg CB-2 to the feed hopper of the injection molding machine;
- install the third-layer mold in the injection molding machine and insert the second layer attached to the first layer;
- Injection mold the mixture of TPV-3 and CB-2 into the third-layer mold;
- keep pressure for 50s and open the mold to get out the three-layer cable accessory product (referred to as "Product 2"), wherein the third layer is attached to the second layer and surrounds the second layer.

### Example 3

- set up the same injection molding machine as used in Example 1;
- feed a mixture of 9.5kg SEBS-1, 0.5kg TPV-1 and 4kg CB-2 to the feed hopper of the injection molding machine;
- install the first-layer mold in the injection molding machine;
- Injection mold the mixture of SEBS-1, TPV-1 and CB-2 into the first-layer mold;
- keep pressure for 15s and open the mold to get out the first layer;
- feed a mixture of 9.5kg SEBS-2 and 0.5kg TPV-2 to the feed hopper of the injection molding machine;
- install the second-layer mold in the injection molding machine and insert the first layer;
- Injection mold the mixture of SEBS-2 and TPV-2 into the second-layer mold;
- keep pressure for 30s and open the mold to get out the second layer which is attached to the first layer and surrounds the first layer;
- feed a mixture of 10kg SEBS-3, 1.5kg CB-2 and 0.4kg GR-1 to the feed hopper of the injection molding machine;
- install the third-layer mold in the injection molding machine and insert the second layer attached to the first layer;
- Injection mold the mixture of SEBS-3, CB-2 and GR-1 into the third-layer mold;
- keep pressure for 50s and open the mold to get out the three-layer cable accessory product (referred to as "Product 3"), wherein the third layer is attached to the second layer and surrounds the second layer.

### Comparative Example 1

- set up the same injection molding machine as used in Example 1;
- feed a mixture of 10kg SEBS-4 and 4kg CB-1 to the feed hopper of the injection molding machine;
- install the first-layer mold in the injection molding machine;
- Injection mold the mixture of SEBS-4 and CB-1 into the first-layer mold;
- keep pressure for 15s and open the mold to get out the first layer;
- feed 10kg TPV-4 to the feed hopper of the injection molding machine;
- install the second-layer mold in the injection molding machine and insert the first layer;
- Injection mold the TPV-4 into the second-layer mold;
- keep pressure for 30s and open the mold to get out the second layer which is attached to the first layer and surrounds the first layer;
- feed a mixture of 10kg SEBS-3 and 0.5kg CB-2 to the feed hopper of the injection molding machine;
- install the third-layer mold in the injection molding machine and insert the second layer attached to the first layer;
- Injection mold the mixture of SEBS-3 and CB-2 into the third-layer mold;
- keep pressure for 50s and open the mold to get out the three-layer cable accessory product (referred to as "Comparative Product 2"), wherein the third layer is attached to the second layer and surrounds the second layer.

### Comparative Example 2

- set up the same injection molding machine as used in Example 1;
- feed a mixture of 10kg SEBS-1 and 4kg CB-1 to the feed hopper of the injection molding machine;
- install the first-layer mold in the injection molding machine;
- Injection mold the mixture of SEBS-1 and CB-1 into the first-layer mold;
- keep pressure for 15s and open the mold to get out the first layer;
- feed 10kg TPV-4 to the feed hopper of the injection molding machine;
- install the second-layer mold in the injection molding machine and insert the first layer;
- Injection mold the TPV-4 into the second-layer mold;
- keep pressure for 30s and open the mold to get out the second layer which is attached to the first layer and surrounds the first layer;
- feed a mixture of 10kg SEBS-3 and 3kg CB-2 to the feed hopper of the injection molding machine;
- install the third-layer mold in the injection molding machine and insert the second layer attached to the first layer;
- Injection mold the mixture of SEBS-3 and CB-2 into the third-layer mold;
- keep pressure for 50s and open the mold to get out the three-layer cable accessory product (referred to as "Comparative Product 1"), wherein the third layer is attached to the second layer and surrounds the second layer.

### Comparative Example 3

- set up the same injection molding machine as used in Example 1;
- feed a mixture of 10kg SEBS-4 and 4kg CB-1 to the feed hopper of the injection molding machine;
- install the first-layer mold in the injection molding machine;
- Injection mold the mixture of SEBS-4 and CB-1 into the first-layer mold;
- keep pressure for 15s and open the mold to get out the first layer;
- feed 10kg SEBS-2 to the feed hopper of the injection molding machine;
- install the second-layer mold in the injection molding machine and insert the first layer;
- Injection mold the SEBS-2 into the second-layer mold;
- keep pressure for 30s and open the mold to get out the second layer which is attached to the first layer and surrounds the first layer;
- feed a mixture of 10kg SEBS-3 and 3kg CB-2 to the feed hopper of the injection molding machine;
- install the third-layer mold in the injection molding machine and insert the second layer attached to the first layer;
- Injection mold the mixture of SEBS-3 and CB-2 into the third-layer mold;
- keep pressure for 50s and open the mold to get out the three-layer cable accessory product (referred to as "Comparative Product 3"), wherein the third layer is attached to the second layer and surrounds the second layer.

### Comparative Example 4

- set up a rubber injection machine (YIZUMI YL2-V200L, Guangdong YIZUMI Precision Machine Co. Ltd.), with a curing temperature of 170-200°C, and an injection pressure of 20-110bar;
- feed a mixture of 10kg EPDM-1 and 3.5kg CB-1 to the feed hopper of the rubber injection machine;
- install a first-layer mold in the rubber injection machine;
- Inject the mixture of EPDM-1 and CB-1 into the first-layer mold;
- cure for 10mins and open the mold to get out the first layer;
- feed a mixture of 10kg EPDM-3 and 2.5kg CB-2 to the feed hopper of the rubber injection machine;
- install a third-layer mold in the rubber injection machine;
- Inject the mixture of EPDM-3 and CB-2 into the third-layer mold;
- cure for 10mins and open the mold to get out the third layer;
- feed 10kg EPDM-2 to the feed hopper of the rubber injection machine;
- install a second-layer mold, which has the first layer and the third layer mounted thereon, in the rubber injection machine;
- Inject the EPDM-2 into the second-layer mold, wherein the second layer is injected between the first layer and the third layer;
- cure for 10mins and open the mold to get out the three-layer cable accessory product (referred to as "Comparative Product 4").

### Test

The performance and properties of the cable accessories were evaluated in terms of processability, mechanical properties, and electrical properties.

### 1. Processability

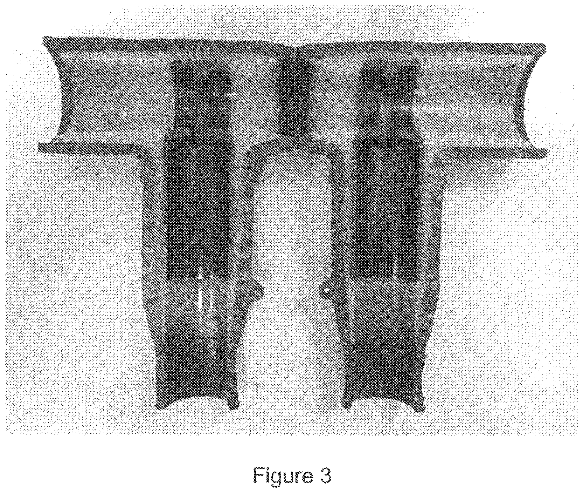

Examples 1-3 provide well-shaped cable accessories. Figure 3 shows a picture of the cross section of the cable accessory produced in Example 1. It can be seen that all the three layers of the cable accessory have clear cross profiles without any overflow, and no separation between layers is observed. In contrast, Comparative Examples 1 and 3 shows unclear boundaries between the first layer and the second layer, probably due to the use of SEBS with a H/S weight ratio of 5:95 in the first layer.

In Examples 1-3 and Comparative Examples 1-3, it takes less than 3 minutes for each layer to be molded and the total time for preparing the cable accessory is less than 9 minutes. In contrast, it takes at least 10 minutes for each layer to be molded and the total time for preparing the cable accessory is at least 30 minutes in Comparative Example 4. Therefore, due to the use of TPE materials, the processing time of the cable accessory is significantly reduced by 70% as compared with the traditional process of using conventional rubber materials such as EPDM rubber. It is a great advantage of the present invention to shorten the processing time and thereby improve the productivity from the business viewpoint.

In addition, the cost of the products according to the present invention is significantly lower than that of the prior art products which are made of EPDM rubbers. Specifically, when the product size is the same, the cost can be significantly reduced as compared with Comparative Product 4. Furthermore, the products according to the present invention can have lower density than Comparative Product 4, which means lighter weight and therefore can provide more cost savings in association with the light weight.

### 2. Mechanical Properties

The hardness was tested according to ISO 7619-1 (rubber, vulcanized or thermoplastic- Determination of indentation hardness- Part 1: Durometer method (Shore hardness)), with Shore A scale for rubbers in the normal hardness range.

The tensile strength and elongation were tested according to ASTM D412-06 (a standard test method for vulcanized rubber and thermoplastic elastomers-tension (Die B)). Tensile strength is the maximum tensile stress applied in stretching a specimen to rupture. Elongation is the ultimate elongation at which rupture occurs in the application of continued tensile stress.

The tear strength was tested according to ASTM D624-001 (a standard test method for tear strength of conventional vulcanized rubber and thermoplastic elastomers), by using a Type C (right angle) test piece. Type C tear strength is the maximum force required to cause a rupture of a Type C (right angle) test piece, divided by the thickness of the test piece.

The test results of the mechanical properties are summarized in Table 2.

**Table 2**

| | | Hardness (Shore A) | Tensile strength (MPa) | Elongation (%) | Tear strength (N/mm) |
|---|---|---|---|---|---|
| The first layer | Product 1 | 85 | 17.6 | 600 | 52.0 |
| | Product 2 | 60 | 15.0 | 540 | 39.0 |
| | Product 3 | 85 | 17.2 | 550 | 52.0 |
| | Comparative product 1 | 40 | 12.0 | 550 | 18.0 |
| | Comparative product 2 | 85 | 17.6 | 600 | 52.0 |
| | Comparative product 3 | 40 | 12.0 | 550 | 18.0 |
| | Comparative product 4 | 79 | 4.6 | 138 | 35.0 |
| The second layer | Product 1 | 75 | 25.0 | 850 | 33.0 |
| | Product 2 | 55 | 15.0 | 800 | 34.5 |
| | Product 3 | 65 | 25.0 | 844 | 33.5 |
| | Comparative product 1 | 94 | 13.0 | 560 | 57.0 |
| | Comparative product 2 | 94 | 13.0 | 560 | 57.0 |
| | Comparative product 3 | 75 | 25.0 | 850 | 33.0 |
| | Comparative product 4 | 54 | 12.5 | 794 | 25.8 |
| The third layer | Product 1 | 50 | 15.0 | 850 | 26.2 |
| | Product 2 | 60 | 15.0 | 870 | 26.0 |
| | Product 3 | 50 | 15.0 | 845 | 26.0 |
| | Comparative product 1 | 48 | 12.0 | 866 | 21.6 |
| | Comparative product 2 | 50 | 15.0 | 850 | 26.2 |
| | Comparative product 3 | 50 | 15.0 | 850 | 26.2 |
| | Comparative product 4 | 50 | 7.3 | 757 | 18.6 |

It can be seen from Table 2 that all the products according to the present invention show a good balance of hardness, tensile strength, elongation, and tear strength. In contrast, Comparative product 1 shows a first layer which has a low hardness and a low tear strength due to the use of SEBS with a HIS weight ratio of 5:95, and a second layer which has a high hardness and a relatively low tensile strength due to the use of TPV with a HIS weight ratio of 60:40. During the application process, it is found that the high hardness of the second layer causes difficulty in assembling Comparative product 1 with a cable. The same difficulty is found with Comparative product 2. Comparative product 2 is almost same as Product 1, with the only difference being that the material used to make the second layer is TPV with a H/S weight ratio of 60:40. Further, due to the big hardness difference between the first layer and the second layer of Comparative product 1, it can be expected that the first layer and the second layer tend to separate from each other during the application process, especially when the product need to be subject to big temperature change in use. Comparative product 3 is almost same as Product 1, with the only difference being that the material used to make the first layer is SEBS-4 with a H/S weight ratio of 5:95. It can be seen that the first layer of Comparative product 3 has a low hardness of 40 and a low tear strength of 18N/mm.

Comparative product 4 represents a conventional MV cable accessory. It can be seen that all the products according to the present invention exhibit comparable or even better performance in terms of hardness, tensile strength, elongation, and tear strength, as compared with Comparative product 4.

### 3. Electrical properties

The volume resistivity was tested according to IEC 60093-1980 (a test method for volume resistivity and surface resistivity of solid electrical insulating materials). The volume resistivity is the volume resistance reduced to a cubical unit volume.

The dielectric strength was tested at 23°C according to ASTM D 149-97A (reapproved in 2004) (a standard test method for dielectric breakdown voltage and dielectric strength of solid electrical insulating materials at commercial power frequencies). The dielectric strength is the voltage gradient at which dielectric failure of the insulating material occurs under specific conditions of test.

Serviceability test was conducted in terms of AC voltage, partial discharge (PD), impulse and breakdown voltage according to GBIT 18889-2002.

The test results of the electrical properties are summarized in Tables 3 and 4.

**Table 3**

| | | Volume resistivity (Ω•cm) | Dielectric strength (23°C, kV/mm) (1mm) |
|---|---|---|---|
| The first layer | Product 1 | 35 | / |
| | Product 2 | 20 | / |
| | Product 3 | 86 | / |
| | Comparative product 1 | 260 | / |
| | Comparative product 2 | 35 | / |
| | Comparative product 3 | 260 | / |
| | Comparative product 4 | 22 | / |
| The second layer | Product 1 | 1.6*10¹⁸ | 39.5 |
| | Product 2 | 2.9×10¹⁶ | 36.4 |
| | Product 3 | 3.6×10¹⁶ | 33.9 |
| | Comparative product 1 | 1.8×10¹⁴ | 35.2 |
| | Comparative product 2 | 1.8×10¹⁴ | 35.2 |
| | Comparative product 3 | 1.6*10¹⁸ | 39.5 |
| | Comparative product 4 | 5.0*10¹² | 33.7 |
| The third layer | Product 1 | 400 | / |
| | Product 2 | 780 | / |
| | Product 3 | 400 | / |
| | Comparative product 1 | 2.1*10⁹ | / |
| | Comparative product 2 | 400 | / |
| | Comparative product 3 | 400 | / |
| | Comparative product 4 | 260 | / |

It can be seen from Table 3 that all the products according to the present invention achieve desired electrical properties in terms of volume resistivity and dielectric strength. In contrast, Comparative product 1 shows a first layer which has a high volume resistivity due to the use of SEBS with a H/S weight ratio of 5:95, a second layer which has a relatively low volume resistivity due to the use of TPV with a H/S weight ratio of 60:40, and a third layer which has a high volume resistivity due to the insufficient amount of conductive filler. Comparative product 2 has almost the same composition as Product 1, with the only difference being that the material used to make the second layer is TPV with a H/S weight ratio of 60:40. It can be seen that Comparative product 2 has a second layer with a relatively lower volume resistivity as compared with Product 1. Comparative product 3 has almost the same composition as Product 1, with the only difference being that the material used to make the first layer is SEBS-4 with a H/S weight ratio of 5:95. It can be seen that Comparative product 3 has a first layer which has a high volume resistivity of 260 Ω•cm.

Comparative product 4 represents a conventional MV cable accessory. It can be seen that all the products according to the present invention exhibit comparable or even better performance in terms of volume resistivity and dielectric strength, as compared with Comparative product 4.

**Table 4**

| Testing Item | AC Voltage test: AC for 5 min at 39.2 kV (4,5 U0) | Partial discharge test: 10pC max. at 15kV (1,73 U0) | Impulse test:10 impulses of each polarity, peak value 95kV | Breakdown voltage (kV) |
|---|---|---|---|---|
| Product 1 | Pass | Pass | Pass | 95 |
| Product 2 | Pass | Pass | Pass | 100 |
| Product 3 | Pass | Pass | Pass | 95 |
| Comparative product 1 | N/A* | N/A* | N/A* | N/A* |
| Comparative product 2 | N/A* | N/A* | N/A* | N/A* |
| Comparative product 3 | Fail | Fail | Fail | 15 |
| Comparative product 4 | Pass | Pass | Pass | 80 |

| | | | | |
|---|---|---|---|---|
| *: N/A means "Not Available/ Not applicable". | | | | |

It can be seen from Table 4 that all the products according to the present invention pass the serviceability test as a MV cable accessory, and exhibit a breakdown voltage of 95 to 100kV which is even higher than that of Comparative product 4 (80kV). In contrast, Comparative Products 1 and 2 cannot be tested due to the difficulty in assembling with a cable. Comparative Product 3 fails in the serviceability test and exhibits a breakdown voltage of less than 15kV, which is much lower than that of the products according to the present invention and Comparative product 4.

To sum up, as compared with the conventional cable accessory made from rubbers such as EPDM rubbers, the present invention makes it possible to provide a cable accessory with improved and balanced mechanical and electrical performance, in a more efficient way. In this regard, although Chinese Patent No. 1,234,192 to Fuzhou Zhongneng Power Equipment Co. Ltd and US Patent No. 6,905,356 to Roy, et al. as discussed above disclose TPE materials may be used to make a cable connector so as to improve the production efficiency, neither of them mention the commercial feasibility of a cable connector made therefrom, nor do they provide any working example of a cable connector which is successfully made from TPE materials or applicable to the harsh electrical environment. Through massive experiments, comparisons and analysis, the present inventors finally concludes that the ratio of the hard segments to the soft segments in the TPE material significantly affect the performance of the resultant cable accessory. With this finding, the present invention provides a cable accessory which is made of TPE materials and is ready for commercialization.

## Claims

1. A cable accessory (10, 20) made of thermoplastic elastomer materials, wherein the thermoplastic elastomer materials comprise hard segments and soft segments in a weight ratio of 10:90 to 50:50, wherein the cable accessory (10, 20) comprises a first layer (202) defining a passage way (201) and a second layer (204) surrounding the first layer (202), in which the first layer (202) is made of a first thermoplastic elastomer material which is semi-conductive having a volume resistivity below 100 Q-cm and comprises hard segments and soft segments in a weight ratio of 20:80 to 50:50, and the second layer (204) is made of a second thermoplastic elastomer material which is insulative and comprises hard segments and soft segments in a weight ratio of 15:85 to 45:55.

2. A cable connector comprising a first layer (202) defining a passage way (201) and a second layer (204) surrounding the first layer (202), in which the first layer (202) is made of a first thermoplastic elastomer material which is semi-conductive having a volume resistivity below 100 Ω·cm and comprises hard segments and soft segments in a weight ratio of 20:80 to 50:50, and the second layer (204) is made of a second thermoplastic elastomer material which is insulative and comprises hard segments and soft segments in a weight ratio of 15:85 to 45:55.

3. The cable accessory (10, 20) according to claim 1 or the cable connector according to claim 2, wherein the hard segments are derived from at least one selected from the group consisting of polyolefins, polyesters, polyamides, polyurethanes and any combinations thereof.

4. The cable accessory (10, 20) or the cable connector according to claim 3, wherein the hard segments are derived from at least one selected from the group consisting of polyethylene, polypropylene, polybutylene, polystyrene, polyethylene terephthalate, polybutylene terephthaiate and any combinations thereof.

5. The cable accessory (10, 20) according to claim 1 or the cable connector according to claim 2, wherein the soft segments are derived from at least one selected from the group consisting of diolefin polymers, hydrogenated diolefin polymers, polyethers, polyesters, and any combinations thereof.

6. The cable accessory (10, 20) or the cable connector according to claim 5, wherein the soft segments are derived from at least one selected from the group consisting of polybutadiene, hydrogenated polybutadiene, polyisoprene, hydrogenated polyisoprene, polyethyleneglycol, polypropyleneglycol, polybutyleneglycol, ethylene-propylene-diene monomer (EPDM) rubber and any combinations thereof.

7. The cable accessory (10, 20) according to claim 1 or the cable connector according to claim 2, wherein the thermoplastic elastomer material is selected from a styrenic block copolymer, a thermoplastic vulcanizate, and any combinations thereof.

8. The cable accessory (10, 20) according to claim 1 or the cable connector according to claim 2, wherein the cable accessory (10, 20) or the cable connector further comprises a third layer (206) surrounding the second layer (204), in which the third layer (206) is made of a third thermoplastic elastomer material which is semi-conductive having a volume resistivity below 1000 Ω·cm and comprises hard segments and soft segments in a weight ratio of 10:90 to 40:60.

9. The cable accessory (10, 20) or the cable connector according to claim 8, wherein the first thermoplastic elastomer material and the third thermoplastic elastomer material each independently comprise a conductive filler selected from the group consisting of conductive carbon black, conductive graphite, metal particles, metal fibers, and any combinations thereof.

10. The cable accessory (10, 20) or the cable connector according to claim 9, wherein the conductive filler is present in an amount of 5-40 wt%, based on the total weight of the first or third thermoplastic elastomer material.

11. The cable accessory (10, 20) or the cable connector according to claim 10, wherein the conductive filler is present in an amount of 10-30 wt%, based on the total weight of the first or third thermoplastic elastomer material.

12. Use of thermoplastic elastomer materials comprising hard segments and soft segments in a weight ratio of 10:90 to 50:50 for preparing a cable accessory (10, 20) according to claim 1.

13. The use according to claim 12, wherein the thermoplastic elastomer material further comprises a conductive filler selected from the group consisting of conductive carbon black, conductive graphite, metal particles, metal fibers, and any combinations thereof.

14. A process for preparing a cable accessory (10, 20) according to claim 1 or a cable connector according to claim 2, the process comprising a step of injection molding thermoplastic elastomer materials into a cable accessory (10, 20) or a cable connector.

15. The process according to claim 14, comprising the steps of
injection molding a first thermoplastic elastomer material into a first layer (202) defining a passage way (201) and
injection molding a second thermoplastic elastomer material into a second layer (204) surrounding the first layer (202), wherein
the first thermoplastic elastomer material is semi-conductive having a volume resistivity below 100 Ω·cm and comprises hard segments and soft segments in a weight ratio of 20:80 to 50:50, and
the second thermoplastic elastomer material is insulative and comprises hard segments and soft segments in a weight ratio of 15:85 to 45:55,
preferably further comprising the step of
injection molding a third thermoplastic elastomer material into a third layer (206) surrounding the second layer (204), in which the third thermoplastic elastomer material is semi-conductive having a volume resistivity below 1000 Ω·cm and comprises hard segments and soft segments in a weight ratio of 10:90 to 40:60.

## Patentansprüche

1. Kabelzubehör (10, 20), das aus thermoplastischen Elastomermaterialien hergestellt ist, wobei die thermoplastischen Elastomermaterialien harte Segmente und weiche Segmente in einem Gewichtsverhältnis von 10:90 bis 50:50 umfassen, wobei das Kabelzubehör (10, 20) eine erste Schicht (202), die einen Durchgang (201) definiert, und eine zweite Schicht (204) umfasst, die die erste Schicht (202) umgibt, wobei die erste Schicht (202) aus einem ersten thermoplastischen Elastomermaterial hergestellt ist, das halbleitend ist und einen spezifischen Volumenwiderstand unter 100 Q·cm aufweist und harte Segmente und weiche Segmente in einem Gewichtsverhältnis von 20:80 bis 50:50 umfasst, und die zweite Schicht (204) aus einem zweiten thermoplastischen Elastomermaterial hergestellt ist, das isolierend ist und harte Segmente und weiche Segmente in einem Gewichtsverhältnis von 15:85 bis 45:55 umfasst.

2. Kabelverbinder, umfassend eine erste Schicht (202), die einen Durchgang (201) definiert, und eine zweite Schicht (204), die die erste Schicht (202) umgibt, wobei die erste Schicht (202) aus einem ersten thermoplastischen Elastomermaterial hergestellt ist, das halbleitend ist und einen spezifischen Volumenwiderstand unter 100 Q·cm aufweist und harte Segmente und weiche Segmente in einem Gewichtsverhältnis von 20:80 bis 50:50 umfasst, und die zweite Schicht (204) aus einem zweiten thermoplastischen Elastomermaterial hergestellt ist, das isolierend ist und harte Segmente und weiche Segmente in einem Gewichtsverhältnis von 15:85 bis 45:55 umfasst.

3. Kabelzubehör (10, 20) nach Anspruch 1 oder Kabelverbinder nach Anspruch 2, wobei die harten Segmente von mindestens einem abgeleitet sind, das ausgewählt ist aus der Gruppe bestehend aus Polyolefinen, Polyestern, Polyamiden, Polyurethanen und beliebigen Kombinationen davon.

4. Kabelzubehör (10, 20) oder Kabelverbinder nach Anspruch 3, wobei die harten Segmente von mindestens einem abgeleitet sind, das ausgewählt ist aus der Gruppe bestehend aus Polyethylen, Polypropylen, Polybutylen, Polystyrol, Polyethylenterephthalat, Polybutylenterephthalat und beliebigen Kombinationen davon.

5. Kabelzubehör (10, 20) nach Anspruch 1 oder Kabelverbinder nach Anspruch 2, wobei die weichen Segmente von mindestens einem abgeleitet sind, das ausgewählt ist aus der Gruppe bestehend aus Diolefinpolymeren, hydrierten Diolefinpolymeren, Polyethern, Polyestern und beliebigen Kombinationen davon.

6. Kabelzubehör (10, 20) oder Kabelverbinder nach Anspruch 5, wobei die weichen Segmente von mindestens einem abgeleitet sind, das ausgewählt ist aus der Gruppe bestehend aus Polybutadien, hydriertem Polybutadien, Polyisopren, hydriertem Polyisopren, Polyethylenglycol, Polypropylenglycol, Polybutylenglycol, Ethylen-Propylen-Dien-Monomer-Kautschuk (EPDM-Kautschuk) und beliebigen Kombinationen davon.

7. Kabelzubehör (10, 20) nach Anspruch 1 oder Kabelverbinder nach Anspruch 2, wobei das thermoplastische Elastomermaterial ausgewählt ist aus einem Styrolblockcopolymer, einem thermoplastischen Vulkanisat und beliebigen Kombinationen davon.

8. Kabelzubehör (10, 20) nach Anspruch 1 oder Kabelverbinder nach Anspruch 2, wobei das Kabelzubehör (10, 20) oder der Kabelverbinder ferner eine dritte Schicht (206) umfassen, die die zweite Schicht (204) umgibt, wobei die dritte Schicht (206) aus einem dritten thermoplastischen Elastomermaterial hergestellt ist, das halbleitend ist und einen spezifischen Volumenwiederstand unter 1000 Q·cm aufweist und harte Segmente und weiche Segmente in einem Gewichtsverhältnis von 10:90 bis 40:60 umfasst.

9. Kabelzubehör (10, 20) oder Kabelverbinder nach Anspruch 8, wobei das erste thermoplastische Elastomermaterial und das dritte thermoplastische Elastomermaterial jeweils unabhängig einen leitfähigen Füllstoff umfassen, der ausgewählt ist aus der Gruppe bestehend aus leitfähigem Ruß, leitfähigem Grafit, Metallteilchen, Metallfasern und beliebigen Kombinationen davon.

10. Kabelzubehör (10, 20) oder Kabelverbinder nach Anspruch 9, wobei der leitfähige Füllstoff in einer Menge von 5 bis 40 Gew% bezogen auf das Gesamtgewicht des ersten oder des dritten thermoplastischen Elastomermaterials vorhanden ist.

11. Kabelzubehör (10, 20) oder Kabelverbinder nach Anspruch 10, wobei der leitfähige Füllstoff in einer Menge von 10 bis 30 Gew% bezogen auf das Gesamtgewicht des ersten oder des dritten thermoplastischen Elastomermaterials vorhanden ist.

12. Verwendung von thermoplastischen Elastomermaterialien mit harten Segmenten und weichen Segmenten in einem Gewichtsverhältnis von 10:90 bis 50:50 zur Herstellung eines Kabelzubehörs (10, 20) nach Anspruch 1.

13. Verwendung nach Anspruch 12, wobei das thermoplastische Elastomermaterial ferner einen leitfähigen Füllstoff umfasst, der ausgewählt ist aus der Gruppe bestehend aus leitfähigem Ruß, leitfähigem Grafit, Metallteilchen, Metallfasern und beliebigen Kombinationen davon.

14. Prozess zur Herstellung eines Kabelzubehörs (10, 20) nach Anspruch 1 oder eines Kabelverbinders nach Anspruch 2, wobei der Prozess einen Schritt des Spritzgießens thermoplastischer Elastomermaterialien zu einem Kabelzubehör (10, 20) oder einem Kabelverbinder umfasst.

15. Prozess nach Anspruch 14, umfassend die folgenden Schritte:
Spritzgießen eines ersten thermoplastischen Elastomermaterials zu einer ersten Schicht (202), die einen Durchgang (201) definiert, und
Spritzgießen eines zweiten thermoplastischen Elastomermaterials zu einer zweiten Schicht (204), die die erste Schicht (202) umgibt, wobei
das erste thermoplastische Elastomermaterial halbleitend ist und einen spezifischen Volumenwiderstand unter 100 Q·cm aufweist und harte Segmente und weiche Segmente in einem Gewichtsverhältnis von 20:80 bis 50:50 umfasst, und
das zweite thermoplastische Elastomermaterial isolierend ist und harte Segmente und weiche Segmente in einem Gewichtsverhältnis von 15:85 bis 45:55 umfasst,
vorzugsweise ferner umfassend den folgenden Schritt:
Spritzgießen eines dritten thermoplastischen Elastomermaterials zu einer dritten Schicht (206), die die zweite Schicht (204) umgibt, wobei das dritte thermoplastische Elastomermaterial halbleitend ist und einen spezifischen Volumenwiderstand unter 1000 Q·cm aufweist und harte Segmente und weiche Segmente in einem Gewichtsverhältnis von 10:90 bis 40:60 umfasst.

## Revendications

1. Accessoire de câble (10, 20) constitué de matériaux élastomères thermoplastiques, dans lequel les matériaux élastomères thermoplastiques comprennent des segments durs et des segments mous dans un rapport pondéral de 10:90 à 50:50, dans lequel l'accessoire de câble (10, 20) comprend une première couche (202) définissant un passage (201) et une deuxième couche (204) entourant la première couche (202), dans lequel la première couche (202) est constituée d'un premier matériau élastomère thermoplastique qui est semi-conducteur ayant une résistivité volumique inférieure à 100 Ω·cm et comprend des segments durs et des segments mous dans un rapport pondéral de 20:80 à 50:50, et la deuxième couche (204) est constituée d'un deuxième matériau élastomère thermoplastique qui est isolant et comprend des segments durs et des segments mous dans un rapport pondéral de 15:85 à 45:55.

2. Connecteur de câble comprenant une première couche (202) définissant un passage (201) et une deuxième couche (204) entourant la première couche (202), dans lequel la première couche (202) est constituée d'un premier matériau élastomère thermoplastique qui est semi-conducteur ayant une résistivité volumique inférieure à 100 Q-cm et comprend des segments durs et des segments mous dans un rapport pondéral de 20:80 à 50:50, et la deuxième couche (204) est constituée d'un deuxième matériau élastomère thermoplastique qui est isolant et comprend des segments durs et des segments mous dans un rapport pondéral de 15:85 à 45:55.

3. Accessoire de câble (10, 20) selon la revendication 1 ou connecteur de câble selon la revendication 2, dans lequel les segments durs sont dérivés d'au moins un élément sélectionné dans le groupe constitué par les polyoléfines, les polyesters, les polyamides, les polyuréthanes et une combinaison quelconque de ceux-ci.

4. Accessoire de câble (10, 20) ou connecteur de câble selon la revendication 3, dans lequel les segments durs sont dérivés d'au moins un élément sélectionné dans le groupe constitué par le polyéthylène, le polypropylène, le polybutylène, le polystyrène, le polyéthylène téréphtalate, le polybutylène téréphtalate et une combinaison quelconque de ceux-ci.

5. Accessoire de câble (10, 20) selon la revendication 1 ou connecteur de câble selon la revendication 2, dans lequel les segments mous sont dérivés d'au moins un polymère sélectionné dans le groupe constitué par les polymères dioléfiniques, les polymères dioléfiniques hydrogénés, les polyéthers, les polyesters, et des combinaisons quelconques de ceux-ci.

6. Accessoire de câble (10, 20) ou connecteur de câble selon la revendication 5, dans lequel les segments mous sont dérivés d'au moins un élément sélectionné dans le groupe constitué par le polybutadiène, le polybutadiène hydrogéné, le polyisoprène, le polyisoprène hydrogéné, le polyéthylène glycol, le polypropylène glycol, le polybutylène glycol, le caoutchouc de monomère d'éthylène propylène diénique (EPDM) et une combinaison quelconque de ceux-ci.

7. Accessoire de câble (10, 20) selon la revendication 1 ou connecteur de câble selon la revendication 2, dans lequel le matériau élastomère thermoplastique est sélectionné entre un copolymère séquencé styrénique, un vulcanisat thermoplastique, et des combinaisons quelconques de ceux-ci.

8. Accessoire de câble (10, 20) selon la revendication 1 ou connecteur de câble selon la revendication 2, dans lequel l'accessoire de câble (10, 20) ou le connecteur de câble comprend en outre une troisième couche (206) entourant la deuxième couche (204), dans lequel la troisième couche (206) est constituée d'un troisième matériau élastomère thermoplastique qui est semi-conducteur ayant une résistivité volumique inférieure à 1 000 Ω·cm et comprend des segments durs et des segments mous dans un rapport pondéral de 10:90 à 40:60.

9. Accessoire de câble (10, 20) ou connecteur de câble selon la revendication 8, dans lequel le premier matériau élastomère thermoplastique et le troisième matériau élastomère thermoplastique comprennent chacun indépendamment une charge conductrice sélectionnée dans le groupe constitué par le noir de carbone conducteur, le graphite conducteur, des particules métalliques, des fibres métalliques, et des combinaisons quelconques de ceux-ci.

10. Accessoire de câble (10, 20) ou connecteur de câble selon la revendication 9, dans lequel la charge conductrice est présente en proportion de 5 à 40 % en poids, rapporté au poids total du premier ou du troisième matériau élastomère thermoplastique.

11. Accessoire de câble (10, 20) ou connecteur de câble selon la revendication 10, dans lequel la charge conductrice est présente en proportion de 10 à 30 % en poids, rapporté au poids total du premier ou du troisième matériau élastomère thermoplastique.

12. Utilisation de matériaux élastomères thermoplastiques comprenant des segments durs et des segments mous dans un rapport pondéral de 10:90 à 50:50 pour la préparation d'un accessoire de câble (10, 20) selon la revendication 1.

13. Utilisation selon la revendication 12, dans lequel le matériau élastomère thermoplastique comprend en outre une charge conductrice sélectionnée dans le groupe constitué par le noir de carbone conducteur, le graphite conducteur, des particules métalliques, des fibres métalliques, et des combinaisons quelconques de ceux-ci.

14. Procédé de préparation d'un accessoire de câble (10, 20) selon la revendication 1 ou d'un connecteur de câble selon la revendication 2, le procédé comprenant une étape de moulage par injection de matériaux élastomères thermoplastiques en un accessoire de câble (10, 20) ou un connecteur de câble.

15. Procédé selon la revendication 14, comprenant les étapes de
moulage par injection d'un premier matériau élastomère thermoplastique en une première couche (202) définissant un passage (201) et
moulage par injection d'un deuxième matériau élastomère thermoplastique en une deuxième couche (204) entourant la première couche (202), dans lequel
le premier matériau élastomère thermoplastique est semi-conducteur ayant une résistivité volumique inférieure à 100 Q-cm et comprend des segments durs et des segments mous dans un rapport pondéral de 20:80 à 50:50, et
le deuxième matériau élastomère thermoplastique est isolant et comprend des segments durs et des segments mous dans un rapport pondéral de 15:85 à 45:55,
de préférence comprenant en outre l'étape de
moulage par injection d'un troisième matériau élastomère thermoplastique en une troisième couche (206) entourant la deuxième couche (204), dans lequel le troisième matériau élastomère thermoplastique est semi-conducteur ayant une résistivité volumique inférieure à 1 000 Ω·cm et comprend des segments durs et des segments mous dans un rapport pondéral de 10:90 à 40:60.
